# EUROPEAN PATENT SPECIFICATION

(11) **EP 0 665 315 B1**
(45) Date of publication and mention of the grant of the patent: **09.02.2000**
(21) Application number: 94120906.6
(22) Date of filing: 29.12.1994
(51) Int. Cl.: D04H 1/00

(54) **Thermoforming process**
Thermoverformungsverfahren
Procédé thermoformant

(30) Priority: 03.01.1994 US 176594
(43) Date of publication of application: 02.08.1995
(73) Proprietor: KIMBERLY-CLARK WORLDWIDE, INC., Neenah, Wisconsin 54956 (US)
(72) Inventor: Pike, Richard Daniel, Norcross, GA 30092 (US); Gryskiewicz, Stanley Michael, Woodstock, GA 30188 (US); Datta, Paul Joseph, Appleton, WI 54915 (US); Chambers Jr., Leon Eugene, Cumming, GA 30131 (US); Sherrod, Earle Harry, Appleton, WI 54911 (US); Sasse, Philip Anthony, Alpharetta, GA 30202 (US)
(74) Representative: Grünecker, Kinkeldey, Stockmair & Schwanhäusser Anwaltssozietät

(56) References cited:
- EP-A- 0 124 387
- EP-A- 0 249 261
- EP-A- 0 337 597
- WO-A-88/04194
- US-A- 3 607 500
- US-A- 4 068 036

## Description

The present invention is related to a process for thermoforming a nonwoven web of the type as defined in the preamble of claim 1.

The production of a bonded, fibrous nonwoven web from a batt of crimpable or crimped conjugate fibers is known in the art. Typically, such webs are formed by heating a batt of crimpable and bondable conjugate fibers to crimp the conjugate fibers and to effect interfiber bonds to form a bonded integral structure. Alternatively, a batt of crimped bondable conjugate fibers is heated to effect interfiber bonds to form a bonded web. In addition, it is also known to form a thermoformed batt of crimped conjugate fibers, for example, by heating the batt to activate the bondable component thereof and subsequently compressing the batt to a desired shape while the batt is hot. Alternatively, a bonded nonwoven conjugate fiber web can be thermoformed by pressing it against a mold to shape the web and then heating the mold to activate the bondable component of the fibers and to form interfiber bonds in the batt. For example, US-A-4,068,036 to Stanistreet defining the closest prior art, disclose a compression method for thermoforming conjugate fiber batts by the use of heated platens. US-A-4,547,420 and US-A-4,795,668 to Krueger et al. disclose a respirator which is thermoformed from meltblown fiber webs of a high fiber density. These thermoformed articles, however, are thermoformed under high compacting pressures and are measurably densified during the thermoforming process to form relatively flat-walled articles, or are thermoformed from relatively incompressible flat webs.

It would be desirable to provide a thermoforming process that thermoforms a lofty substrate nonwoven fiber web without causing significant densification of the web, and thus provides relatively uncompacted thermoformed articles that retain the physical and surface properties, particularly resiliency, strength and cloth-like properties, of the web.

The present invention according to claims 1 and 4 provides a thermoforming process which fulfills the above needs. The term "density-over-area ratio" as used herein is defined as (Dᵢ/Dₒ)/(Aᵢ/Aₒ), wherein Dᵢ is the average density of the thermoformed article, Dₒ is the average density of the substrate web, Aᵢ is the total surface area of the thermoformed article and Aₒ is the total surface area of the substrate web that is placed over the opening of the mold, i.e., the surface area affected by the thermoforming process.

An embodiment of the present invention provides a process for producing a resiliently compressible, cloth-like article from a nonwoven web including the steps of depositing components for a nonwoven fiber web on a foraminous, three dimensionally shaped forming surface to form a nonwoven fiber web, heating the web to melt the adhesive component without melting the structural component, and cooling the shaped web to solidify the melted adhesive component and to form interfiber bonds.

The thermoformed article manufactured by the process of the present invention is highly suitable as personal-care products, packaging materials, cushions, shoulder pads, cloth linings, automotive interior parts, shaped filter media and the like.
Figure 1 illustrate a suitable process for producing suitable nonwoven webs for the present invention.
Figure 2 illustrates a mold assembly highly suitable for producing the resiliently compressible, cloth-like thermoformed articles.
Figure 3 illustrates a dual-screen mold suitable for the present invention.
Figure 4 illustrates an one-screen mold suitable for the present invention.
Figure 5 illustrates a shim-plate thermoforming process.
Figure 6 illustrates a continuous shim-plate thermoforming process.

There is provided by the method of the present invention a thermoformed article having a cloth-like texture and foam-like resilient properties, which is thermoformed from a thermoformable nonwoven fiber web or fabric. The thermoformable fiber web contains a structural fiber component and a heat-activatable adhesive component.

The structural fiber component is crimped spunbond or staple fibers. Suitable fibers for the present invention are homocomponent fibers, i.e., fibers composed of a homogeneous polymer composition, or multicomponent conjugate fibers and the fibers have a crimp level of at least 2 crimps per 2.54 cm (1 inch) as measured in accordance with the ASTM D3937-82 testing procedure. The crimp level of the fibers may be changed to provide different properties to the web, including different density, strength, softness and texture.

The term "spunbond fibers" refers to fibers formed by extruding molten thermoplastic polymers as filaments or fibers from a plurality of relatively fine, usually circular, capillaries of a spinneret, and then rapidly drawing the extruded filaments by an eductive or other well-known drawing mechanism to impart molecular orientation and physical strength to the filaments. The drawn fibers are then deposited onto a forming surface in a highly random manner to form a nonwoven web having essentially a uniform density. The production of spunbond fibers and webs therefrom is disclosed, for example, in US-A-4,340,563 to Appel et al. and US-A-3,692,618 to Dorschner et al.

Suitable crimped monocomponent spunbond fibers can be produced according to the above-described spunbond process with a modification in the fiber spinning step. During the spinning step, the spun fibers exiting the spinneret are asymmetrically cooled across the cross-section, generating solidification gradients within the cross-section of the fibers and thus imparting crimps, particularly helical crimps, on the fibers. Suitable crimped monocomponent staple fibers can be produced from strands of continuous fibers which are spun with any well known staple fiber spinning process and then crimped before the strands are cut to staple lengths either with the above-described asymmetrical cooling process during the fiber spinning step or with a known mechanical crimping process, e.g., a stuffer box or gear crimping, after the strands of fibers are fully formed.

Suitable crimped multicomponent conjugate staple fibers can be spun and crimped with the processes described above for monocomponent staple fibers by replacing the spinneret assembly with a conjugate fiber spinneret assembly, which is well known in the art and, for example, described in US-A-3,730,662 to Nunning. Suitable crimped multicomponent conjugate spunbond fibers can be similarly produced with a monocomponent spunbond fiber production process which is modified to have a conjugate fiber spinneret assembly. Alternatively, spun conjugate fibers, including spunbond fibers and staple fibers, composed of two or more component polymers of different crystallization and/or solidification properties can be crimped during the solidification stage of the fiber spinning process since these differences of the component polymers create crystallization and/or solidification gradients in the fibers, which' spontaneously cause crimps. Further, the differences in crystallization and/or solidification properties, which make the component polymers of the formed fibers to have different heat shrinkages and thus impart "latent crimpability" in the fibers, can be utilized to impart or additionally impart crimps on the fully formed conjugate fibers. Upon exposure to an appropriate heat treatment, the component polymers, having different heat shrinkages, cause the development of latent crimps on the fibers. In addition, conjugate staple fibers composed of two or more component polymers that have different crystallization and/or elastic properties can be crimped by stretching fully formed strands of fibers before the strands are cut to staple lengths. Suitable crimped conjugate staple fibers are commercially available. In accordance with the present invention, the activation of latent crimps on the fibers prior to the formation of a web is more desirable since this process produces more uniform and dimensionally stable webs.

The heat-activatable adhesive component of the thermoformable fiber web may be an external hot-melt adhesive in the form of a powder or liquid, which is applied or sprayed so as to be distributed throughout the web. Adhesives particularly suitable for the present invention are conventional thermoplastic hot-melt adhesives, such as polyethylene-, polyamide-, polyester-and ethylene-vinyl acetate copolymer-based hot-melt adhesives, and the adhesives are selected to have a melting point below the melting point of the structural component of the webs.

For conjugate fibers, the heat-activatable adhesive component may be a component polymer of the fibers, in place of an external adhesive. The adhesive component polymer should have a lower melting point than the other component polymers of the fibers so that upon heating, the adhesive component polymer of the web fibers is melted and the melted portions of the fibers autogenously adhere to adjacent fibers at the cross-over points while the other component polymers of the fibers maintain the physical and dimensional integrity of the web. Consequently, suitable conjugate fibers have the adhesive component polymer at least partially exposed to the surface along substantially the entire length of the fibers. Particularly suitable conjugate fibers should have from about 20% to about 80%, preferably from about 40% to about 60%, by weight of the adhesive polymer. For the present invention, desirable configurations for the conjugate fibers include side-by-side configurations and sheath-core configurations, and suitable sheath-core configurations include eccentric sheath-core and concentric sheath-core configurations. If a sheath-core configuration is employed, it is highly desired to have the adhesive polymer form the sheath.

The suitable fibers of the present invention can be uniformly deposited onto a forming surface to form a loosely entangled nonwoven fiber web and then bonded to provide physical integrity and strength to the nonwoven web. As is known in the art, staple fibers may be deposited onto a forming surface with a conventional carding process, e.g., a woolen or cotton carding process, or air laid; and spun, drawn spunbond fibers may be directly deposited onto a forming surface. Suitable processes for forming spunbond fiber webs are illustrated, for example, in US-A-4,692,618 to Dorschner et al. and US-A-4,340,563 to Appel et al.

The deposited fiber web is heat treated with a bonding process that does not significantly compact the web and provides substantially uniform interfiber bonds throughout the web. Bonding heat treatments useful for the present invention include through-air bonding, hot-oven bonding and infrared-heater bonding processes. The duration and temperature of the bonding process can be varied to accommodate the temperature and speed limitations of different bonding equipment. However, it is important that the selected combination of the duration and the temperature of the bonding process is sufficiently long and high enough so as to melt the adhesive component or adhesive polymer but is not excessively long and high so as to melt the other structural polymers of the conjugate fiber webs, preserving the physical and dimensional integrity of the fiber webs. The deposited fiber web may alternatively be bonded with other conventional bonding processes, such as liquid adhesive bonding, ultrasonic bonding, needling and hydroentangling, that impart physical integrity and strength to the web without significantly compacting it.

A wide variety of thermoplastic polymers known to form fibers and/or filaments can be employed to produce the monocomponent fibers of the present invention. Analogously, the conjugate fibers can be formed from a wide variety of combinations of thermoplastic polymers provided that the selected polymers have sufficiently different melting points, preferably have a melting point difference of at least about 10°C, and, desirably, have different crystallization, solidification and/or elastic properties. The melting point difference between the selected polymers facilitates the heat activated bonding process, the differences in the crystallization and solidification properties promote fiber crimping, especially crimping through heat activation of latent crimps, and the difference in elastic properties facilitates the mechanical crimp forming process. Suitable polymers for the present invention include, but are not limited to, polyolefins, e.g., polyethylene, polypropylene, polybutylene and the like; polyamides, e.g., nylon 6, nylon 6/6, nylon 10, nylon 12 and the like; polyesters, e.g., polyethylene terephthalate, polybutylene terephthalate and the like; polycarbonate; polystyrene; thermoplastic elastomers; vinyl polymers; polyurethane; and blends and copolymers thereof. Particularly suitable polymers for the present invention are polyolefins, including polyethylene, e.g., linear low density polyethylene, low density polyethylene, medium density polyethylene, high density polyethylene and blends thereof; polypropylene; polybutylene; and copolymers as well as blends thereof. Additionally, the suitable fiber forming polymers may have thermoplastic elastomers blended therein. Of these suitable polymers, particularly suitable polymers for the structural component of suitable conjugate fibers include polypropylene and copolymers of polypropylene and ethylene, and particularly suitable polymers for the adhesive component of the conjugate fibers include polyethylenes, more particularly linear low density polyethylene and high density polyethylene. In addition, the adhesive component may contain additives for enhancing the crimpability and/or lowering the bonding temperature of the fibers, and enhancing the abrasion resistance, strength and softness of the resulting webs. For example, the adhesive polymer component may contain about 5 to about 20% by weight of a thermoplastic elastomer such as an ABA' block copolymer of styrene, ethylene-butylene and styrene. Such copolymers are commercially available and some of which are identified in US-A-4,663,220 to Wisneski et al. An example of highly suitable elastomeric block copolymers is KRATON G-2740, which is avaiable from Shell Chemical. Another group of suitable additive polymers is ethylene alkyl acrylate copolymers, such as ethylene butyl acrylate, ethylene methyl acrylate and ethylene ethyl acrylate, and the suitable amount to produce the desired properties is from about 2 wt% to about 50 wt%, based on the total weight of the adhesive polymer component. Yet other suitable additive polymers include polybutylene copolymers and ethylene-propylene copolymers.

The thermoformable nonwoven web of the present invention preferably has a density of about 0.01 to about 0.1 g/cm³, more preferably about 0.0125 to about 0.08 g/cm³, most preferably about 0.015 to about 0.06 g/cm³, and a basis weight of about 10.19 to about 678,2 g/m² (0.3 to about 20 ounce per square yard -osy), more preferably about 17 to about 508,7 g/m² (0.5 to about 15 osy) most preferably about 25,4 to about 339,1 g/m² (0.75 to about 10 osy). The nonwoven web preferably is fabricated from spunbond fibers and/or staple fibers that have an average diameter of about 5 µm to about 100 µm, preferably about 10 µm to about 50 µm. In accordance with the present invention, fiber webs having a density and/or an average fiber thickness significantly outside of the above-specified ranges are not particularly suited since they do not provide desired cloth-like texture and/or resilient compressibility, and suitable nonwoven webs for the present invention are characterized as having relatively uniform interfiber bonds throughout the web rather than having a high concentration of fiber bonds at the surface.

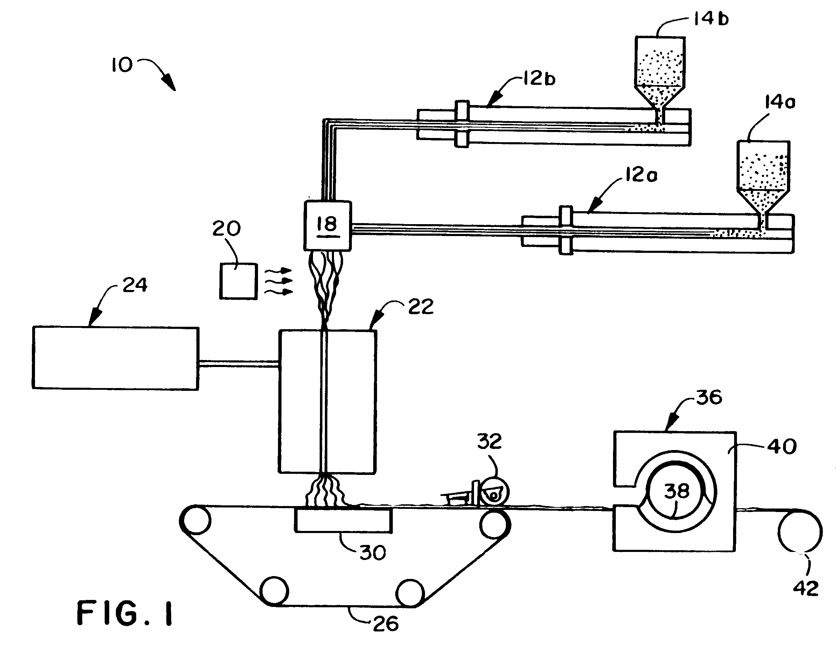

Figure 1 illustrates a particularly suitable process for producing suitable nonwoven webs. A process line 10 is arranged to produce a bicomponent conjugate spunbond fiber web suitable for the present invention. The suitable web forming process illustrated in the process line 10 is a continuous web forming process that produces thermoformable webs which exhibit a cloth-like texture and a high physical strength without the use of an external adhesive, eliminating the need for additional fiber-forming and adhesive-applying steps of producing fiber webs and, thus, economically and efficiently producing highly suitable fiber webs for the present invention. Additionally, this process 10 fully crimps the fibers before they are deposited to form a nonwoven web, producing a more dimensionally and thermally stable fiber web. A pair of extruders 12a and 12b separately extrude two different polymers, which polymers are fed into a first hopper 14a and a second hopper 14b, to simultaneously supply molten polymers to a spinneret 18. Spinnerets for extruding conjugate fibers are well known in the art. Briefly, the spinneret 18 has a housing which contains a spin pack, and the spin pack contains a plurality of plates and dies. The plates have a pattern of openings arranged to create flow paths for directing the two polymers to the dies that have one or more rows of openings, which are designed in accordance with the desired configuration of the resulting conjugate fibers.

A curtain of fibers is produced from the rows of the die openings and is partially quenched by a quench air blower 20 before being fed into a fiber draw unit, or an aspirator, 22. The quenching process not only partially quenches the fibers but also develops a latent helical crimp in the fibers. Suitable fiber draw units or aspirators for use in melt spinning polymers are well known in the art, and particularly suitable fiber draw units for the present invention include linear fiber aspirators of the type disclosed in US-A-3,802,817 to Matsuki et al. and eductive guns of the type disclosed in US-A-3,692,618 to Dorschner et al. and US-A-3,423,266 to Davis et al. Briefly, the fiber draw unit 22 includes an elongate vertical passage through which the filaments are drawn by aspirating air entering from the side of the passage. The fiber draw unit utilizes heated aspirating air in order to simultaneously draw fibers and activate the latent crimps. The temperature of the aspirating air can be regulated by a heater 24. Different levels of crimp can be achieved by changing the aspirating air temperature, and generally, a higher air temperature produces a higher number of crimps. The process line 10 further include an endless foraminous forming surface 26 which is positioned below the fiber draw unit 22. The continuous fibers from the outlet of the draw unit are deposited onto the forming surface 26 in a random fashion to produce a continuous web of uniform density and thickness. The fiber depositing process can be assisted by a vacuum unit 30 placed below the forming surface 26. Optionally, the resulting web can be subjected to a light compacting pressure with a roller 32 to consolidate the web to impart additional physical integrity to the web before being subjected to a bonding process.

The nonwoven web is passed through a through-air bonder 36, which, for example, has a perforated roller 38 and a hood 40 surrounding the perforated roller, to produce a bonded fiber web. The bonding air temperature of the through-air bonder is maintained to heat the web to a temperature which is above the melting point of the adhesive component polymer of the conjugate fibers but below the softening point of the structural component polymer.

In accordance with the present invention, the bonded nonwoven webs are thermoformed in a thermoforming process that does not apply significant compacting pressures and does not subject large sections of the webs to be in contact with a heated or high temperature surface during the thermoforming process in order to avoid significant compaction of the webs and to prevent significant thermal fusion of component fibers at the web surface, retaining soft and cloth-like properties and avoiding the formation of film-like smooth surfaces. Alternatively stated, the thermoforming process does not apply high compacting pressures during the thermoforming process and does not promote concentrated formations of fiber bonds at the web surface, especially, where the web contacts the thermoforming mold. It is also intended to avoid applying stretching tensions on the substrate web once the web is placed over a mold since the web may be excessively stretched and may lose some of the cloth-like texture. Additionally, it is desirable to loosely gather the web over the mold to provide some degree of slack, but not so much as to form folds, to accommodate the stretching of the web during the thermoforming process. Particularly desirable thermoforming processes produce thermoformed articles having a density-over-area ratio between about 1 and about 1.8, preferably between about 1.1 and about 1.5. Correspondingly, the thermoformed articles of the present invention desirably have a density-over-area ratio between about 1 and about 1.8, preferably between about 1.1 and about 1.5.

Hereinafter the invention is described with autogenously bonded conjugate fiber webs for illustration purposes, although, as stated above, adhesively bonded monocomponent and conjugate fiber webs and autogenously bonded conjugate fiber webs can be utilized to produce the thermoformed articles of the present invention. Consequently, the processes and description for melting and bonding the adhesive component polymer of the conjugate fibers are analogously applicable to the processes and description of the hot-melt adhesive.

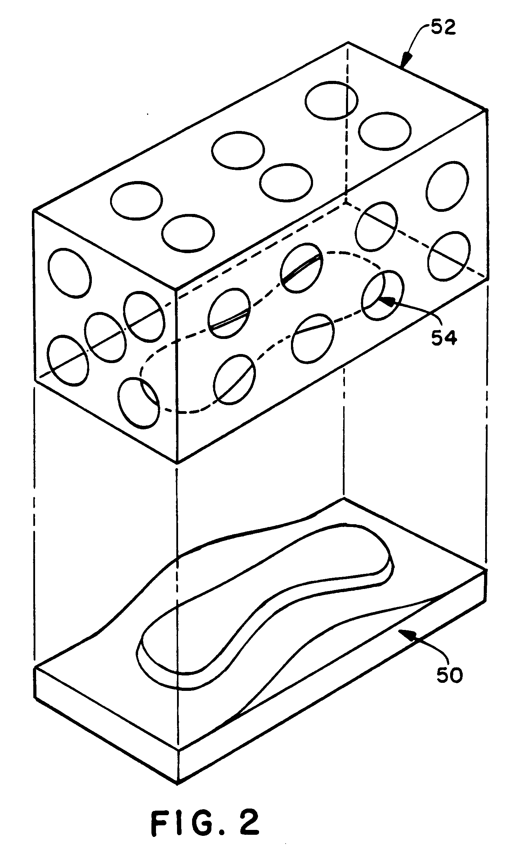

An exemplary, suitable thermoforming process is a mold-assist mold thermoforming process. A bonded nonwoven web of the present invention is preheated to a temperature equal to or above the melting point of the adhesive polymer but below the softening point of the higher melting component polymer of the web fibers to make the web pliable. The preheating can be conveniently accomplished with any of the heat treatment processes described above with respect to the bonding process. The preheated, pliable web is placed over a male or female mold and assisted by a reciprocating assist mold that assists the deformation and shaping of the pliable web to conform to the shape of the mold. The assist mold is placed on the opposite side of the pliable web away from the mold and is designed to have a minimal surface contact with the web. The mold and the assist mold come together to apply light conforming pressure on the web to facilitate the web deformation. The mold and the assist mold are not heated, and desirably, the two molds are cooler than the temperature of the preheated web. The molding process can be further assisted by pneumatic forces acting on the web, such as vacuum or forced-air, to assist the shaping process. It is to be noted that the pressure of the pneumatic assist should not be so high as to appreciably compress the web, or deform or crush the component fibers of the web. In addition, the mold and assist mold should not form a tight fit when the molds are mated, avoiding compaction of the web during the thermoforming process. It is highly desirable that when the mold and assist mold are mated or closed, the molds form a gap therebetween of at least about the thickness of the pliable web. Figure 2 illustrates a suitable male mold 50 and an assist mold 52. The assist mold 52 is a hollow structure which has an opening 54 that corresponds to the contour of the base section of the male mold 50. The opening 54 is slightly larger than the base section of the mold 50 such that the thermoformed web is not appreciably or significantly compacted when the molds are mated. It is to be noted that the assist mold is designed to contact the pliable web only at a limited area. Optionally, if the shape of the mold contains complicated or inwardly concaved contours, the opening of the assist mold may further be equipped with a lining of an extended member of a flexible material, such as a high temperature rubber, to facilitate the assist mold in applying relatively even pressures on the pliable web throughout the contacting area. Additionally, the mold 50 may further contain slits or perforation on its surface to supply a flow of air or vacuum to assist the thermoforming process.

The unheated mold tends to act as a heat sink, cooling the preheated web as the web pliably conforms and comes in contact with the mold. Consequently, unlike thermoforming processes using a heated mold, the present thermoforming process does not melt fuse the web fibers that contact the mold surface, preventing concentrated fiber bond formations at the web surface and retaining the soft, cloth-like texture of the web. Further, articles molded with the present unheated mold thermoforming process need not be held in the mold for an extended duration since the mold, acting as a heat sink, rapidly cools the thermoformed web to retain its molded shape.

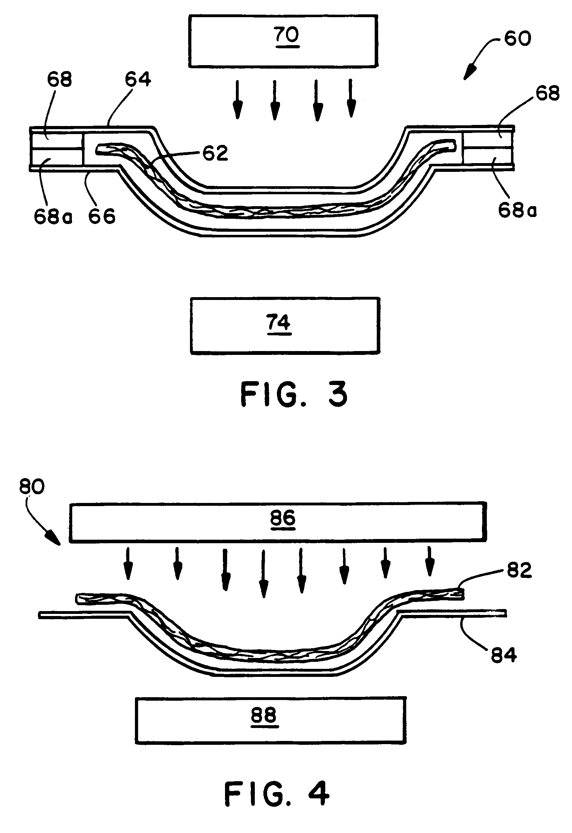

Another exemplary thermoforming process is a dual-screen process. Figure 3 illustrates an exemplary dual-screen process 60. A nonwoven web 62 of the present invention is fed between two rigid screens 64, 66. The upper screen 64 contains a convex mold shape and the lower screen 66 contains a concave shape that complements the convex shape but is larger than the convex shape to correspond and to accommodate the thickness of the web. The edges of the two screens are equipped with upper stopping blocks 68 and lower stopping blocks 68a such that when the screens are joined or closed, the combined thickness of the upper and lower stopping blocks is the desired thickness of the thermoformed article. After a web is placed between the two screens 64, 66, the screens are closed to snugly contain and to constrain the web to conform to the shape of the screens. The constrained web is then subjected to a heat treatment 70 to melt the adhesive component polymer of the web fibers and to form interfiber bonds to retain the deformed pattern. Although any heat treatment described above can be utilized, particularly suitable heat treatment is the through-air heating process since this forced convection heating process more quickly and uniformly heats the web than other heating processes, e.g., infrared and hot-oven heating processes. The heat treated web is then cooled to set the interfiber bonds. The heat treatment 70 may be assisted by a vacuum apparatus 74 to facilitate the proper flow of heating air. Again, the flow rate and pressure of the heating air and vacuum should not be too high as to appreciably compress or bend the component fibers of the web. Alternatively, the heat treatment step may be conducted before the substrate is placed in the mold screens, making the web pliable and having the adhesive component activated. The preheated web is then placed in the screen and cooled to set the interfiber bonds to retain the screen mold shape.

The screens of this process are mesh fabrics or plates fabricated from a metal or a high temperature polymer. Although the area occupied by the voids of each screen may be varied to provide different textures to the thermoformed webs, it is desirable that the total void area is at least about 25%, more desirably at least about 50% of the total surface area of the screen in order to minimize the web from contacting solid surfaces that may be heated during the heat treatment and may act as a pressure and heat concentration points to melt fuse the component web fibers.

Yet another exemplary thermoforming process is an one-screen process as illustrated in Figure 4. The one-screen process 80 employs a thermoforming process which is assisted by a pneumatic flow. A nonwoven web 82 of the present invention is placed over a screen 84 which contains a three dimensional mold shape, and the web is then exposed to a heat treatment 86 to melt the adhesive component polymer of the conjugate fibers, making the web pliable. Again, any heat treatment described above can be utilized, and particularly suitable heat treatment is the through-air heating process. The heat treated, pliable web on the screen 84 is then subjected to pneumatic conforming pressure resulting from a combination of an air flow from the heat treatment source 86 and a pressure drop supplied from a vacuum apparatus 88, which is positioned underneath the screen, to shape the web to conform to the contour of the screen 84. Again, it is to be noted that the pneumatic pressure should not be too high as to significantly compact the web. As in the dual-screen process, the total void area of the screen is at least about 25%, more desirably at least about 50% of the total surface area of the screen, and the heat treatment step may precede the web shaping step.

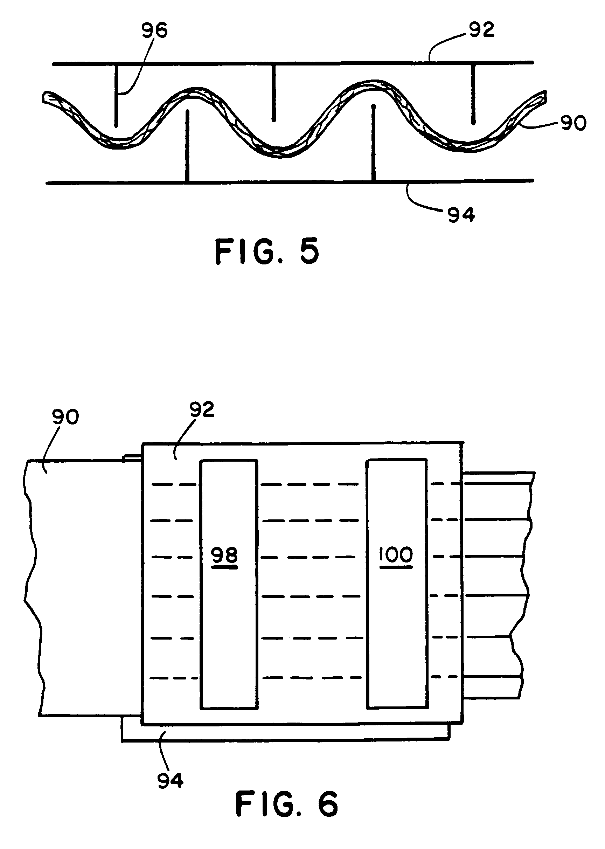

Further yet another exemplary thermoforming process is a shim-plate thermoforming process as illustrated in Figure 5. A nonwoven web 90 is placed between two horizontal rigid, foraminous plates 92, 94 which contain vertical shims 96. The shims have a length shorter than the gap between the two horizontal plates and are alternatingly attached to the top horizontal plate 92 and the bottom horizontal plate 94. The length and placement of and spacing between the shims can be varied to accommodate the needs and uses of the thermoformed articles, and the shims may be fabricated from any rigid material that is not affected by the temperatures of subsequent heat treatments. After the nonwoven web 90 is placed between the horizontal plates, the web is heat treated to melt the adhesive component polymer of the conjugate fibers and then cooled to retain the shape imparted by the alternatingly placed shims, producing, for example, a corrugated or pleated nonwoven web. Again, any heat treatment described above can be utilized, and particularly suitable heat treatment is the through-air heating process. In order to facilitate the heat treatment, the foraminous plates 92, 94 are fabricated to contain a large void surface area. Alternatively, the shim-plate thermoforming process can be conducted on a single plate with vertical or relatively vertical shims. The substrate thermoformable web can be folded into the gaps between the shims by any mechanical or pneumatic means and then heat treated to effect interfiber bonds to retain the folded shapes. It is to be noted that the shim-plate thermoforming process subjects the substrate nonwoven web to be in contact with a very limited sections of the thermoforming apparatus, i.e., only with the top edges of the shims, producing uncompacted articles of high resiliency and cloth-like texture. This shim-plate thermoforming process is particularly adaptable to be a continuous thermoforming process, as illustrated in Figure 6. A relatively continuous nonwoven web 90 can be placed between the above-described horizontal foraminous plates 92, 94 and moved horizontally in the direction of the length of the shims. The nonwoven web 90 is then sequentially exposed to a heat treatment 98, e.g., through-air bonding, to activate the adhesive component and to a cooling treatment 100, e.g., a flow of cooling air, to form interfiber bonds and to set the corrugated shape. Additionally, the shape of the shims can be selected from a wide variety of configurations to produce thermoformed articles having different shapes. Useful shapes of the shims include round, oval and triangular shapes. When shims of non-flat configurations are utilized, the shims can be produced from a rigid, foraminous material and to have a hollow core. The hollow core then can be utilized as a conduit to supply heated air to facilitate the bonding process and cooling air to assist the molded web cooling process.

Although the web forming process and the thermoforming process of the present invention are described above as two separate processes, the two processes can be conducted as one continuous process. For example, the loosely entangled fiber webs are heat treated to activate the adhesive component of the fibers and then the heated webs are directly conveyed over a mold and subjected to one of the above-described thermoforming processes before the webs are cooled.

As an alternative embodiment of the present invention, the thermoformed articles of the present invention can be formed by directly depositing the above-described suitable components of the fiber web, i.e., the structural component and the adhesive component, onto a foraminous forming surface which contains concave or convex shapes that correspond to the desired shape of the thermoformed articles to be produced. Again, for example, staple fibers can be air laid and spunbond fibers can be directly deposited onto the forming surface with or without the assist of a vacuum apparatus, and the deposited fiber web is then subjected to a heat treatment to form interfiber bonds. Suitable heat treatments are the above-described bonding heat treatments, including through-air bonding, hot-oven bonding and infrared-heater bonding processes, which melt the heat activatable component of the fiber web without thermally affecting the structural component of the web. During the heat treatment process, it is desirable to maintain the coherency and to control the compaction level of the laid web by supplying a vacuum device underneath the forming surface and controlling the vacuum level. The thermally bonded web is removed from the forming surface after the web is cooled to retain the shaped contour. This continuous fiber-depositing, thermoforming process is particularly desirable in that the process does not impart any substantial stretching forces throughout the thermoforming process since the deposited fibers, which are only loosely entangled, can be directly deposited to conform to the shape of the forming surface with a minimal conforming force or pressure.

The thermoformable nonwoven webs of the present invention are highly useful for thermoforming personal-care article components, e.g., fluid channeling layers, fluid containment layers and fluid distribution layers for diaper and sanitary napkin; sanitary napkin shells; incontinent adult care product components; face masks; aspirators and the like. Such thermoformed articles not only provide excellent resiliency and cushioning ability but also exhibit a cloth-like texture, making the articles highly functional as well as highly comfortable for the users. For example, the resiliency and texture of the present thermoformed articles allow the articles to conform to bodily movements of the users while providing comfortable cloth-like texture. In addition, the present nonwoven webs can be thermoformed to have diverse, anatomically conforming shapes to provide personal-care products of improved comfort, fit and efficiency.

Although the present invention is illustrated in reference to personal-care products, the invention is not limited to the thermoformed articles for personal-care products. The present invention can be utilized in various applications that benefit from the cloth-like appearance, resilient compressibility and easy thermoformability of the present nonwoven webs. Illustrative of other useful applications include packaging materials, cushions, shoulder pads, cloth linings, automotive interior parts, shaped filter media and the like. In addition, the present thermoformable web may further contain other additives, such as water-absorbent particles, deodorizers, softeners, abrasive particles and the like, and other fibers, such as water-soluble fibers, natural fibers, uncrimped fibers, bulking fibers, filler fibers and the like.

The invention is more particularly described with the following examples. However, the examples are provided for illustration purposes and the invention is not limited thereto.

### Examples:

### Example 1

A 169,55 g/m² (5 osy)spunbond bicomponent fiber web was produced using the production process illustrated in Figure 1. A linear low density polyethylene (LLDPE), Aspun 6811A, which is available from Dow Chemical, was blended with 2 wt% of a TiO₂ concentrate containing 50 wt% of TiO₂ and 50 wt% of a polypropylene, and the mixture was fed into a first single screw extruder. A polypropylene, PD3445, which is available from Exxon, was blended with 2 wt% of the above-described TiO₂ concentrate, and the mixture was fed into a second single screw extruder. The extruded polymers were spun into round bicomponent fibers having a side-by-side configuration and a 1:1 weight ratio of the two component polymers using a bicomponent spinning die, which had a 0.6 mm spinhole diameter and a 6:1 L/D ratio. The melt temperatures of the polymers fed into the spinning die were kept at 212,8°C (415°F) and the spinhole throughput rate was 0.75 gram/hole/minute. The bicomponent fibers exiting the spinning die were quenched by a flow of air having a flow rate of 0,5 m³/min/cm (45 SCFM/inch) spinneret width and a temperature of 18,3°C(65°F). The quenching air was applied about 12,7 cm (5 inches) below the spinneret, and the quenched fibers were drawn in an aspirating unit of the type which is described in US-A-3,802,817 to Matsuki et al. The aspirator was equipped with a temperature controlled aspirating air source, and the feed air temperature was kept at about 176,7°C(350°F). The quenched fibers were drawn with the heated feed air to attain a 0,44 tex (4 denier) thickness. Then, the drawn fibers were deposited onto a foraminous forming surface with the assist of a vacuum flow to form an unbonded fiber web. The unbonded fiber webs were bonded by passing the web through a heating hood (a through-air bonder) which is equipped with a heated air source. The heated air velocity and the temperature of the heated air was 61m/min (200 feet/minute) and 127,8°C(262°F), respectively. The residence time of the web in the hood was about 1 second. The resulting bonded web had a thickness of 0,55cm (0.215 inches) and a density of 0.0317 g/cm³.

The web was placed over a formaminous mold plate, which had evenly distributed circular holes of a 0,64 cm (0.25 inch) diameter. The holes occupied about 40% of the total surface area of the mold plate. The plate contained a rectangular cup-shaped mold depression having the following dimensions: about 11,43 cm (4.5 inch) length, about 7,62 cm (3 inch) width and about 2,54 cm (1 inch) depth. The web was lightly pushed or packed into the depression of the plate to cover about 75% of the depression surface area in order to avoid an excessive stretching of the web during the following thermoforming heat treatment process. The web and the plate were then passed at a speed of 3,05 m/min (10 feet/minute) under a hot air jet supplied from a 0,61 cm (0.24 inch) width slotted nozzle, which was placed about 7,62 cm (3 inches) above the web, to heat and shape the web to conform to the mold depression and to activate the adhesive component of the web, LLDPE. The temperature and the speed of the hot air leaving the nozzle were about 176,7°C(350°F) and 1220m/min (4000 feet/minute). An assist vacuum apparatus was placed underneath the plate to assist the flow of the hot air and to provide an air velocity of 610m/min (2000 feet/minute) through the web. The heat treated web was than cooled to set the interfiber bonds within the web. The resulting thermoformed cup was lofty and had a soft, cloth-like texture. The thermoformed article had a density of 0.0437 g/cm³, and the ratio between the total surface area of the thermoformed article and the total affected surface area of the substrate web was about 1.11. Correspondingly, the density-over-area ratio of the thermoformed article was about 1.24.

The cup-shaped thermoformed article was placed over a flat surface with the opening of the article touching the flat surface. Then, flat articles of different weight, as indicated in Table 1, were placed over the article to test its resiliency. The depth of the thermoformed article was measured in inches x 2,54 cm at three different stages: under the load, immediately after the load was removed and one minute after the load was removed. The results are shown in Table 1.

**Table 1**

| | Weight (lbs) x 0,454 kg | | | | | |
|---|---|---|---|---|---|---|
| | 0 | 0.25 | 0.5 | 1.5 | 4.5 | 10.5 |
| Under Load | 1* | 0.53* | 0.47* | 0.24* | 0.12* | 0.10* |
| Load Removed | - | - | - | - | 0.91* | 0.91* |
| 1 Min. After | - | - | - | - | 1* | 0.94* |

| | | | | | | |
|---|---|---|---|---|---|---|
| * x 2,54 cm | | | | | | |

The above results indicate that the thermoformed article exhibit high resiliency as well as desirable soft, cloth-like texture while retaining the lofty structure of the substrate web.

### Example 2

A bonded nonwoven fiber web of a two layer structure was prepared and thermoformed. The nonwoven web had an inner layer of 33,9 g/m² (1.0 osy) and was a blend, based on the total web weight, of 60 wt% of 5,08 cm (2 inch) long, 0,67 tex (6 denier) polyester staple fibers, which is available from Hoechst-Celanese Corporation, North Carolina, 35 wt% of 3,81 (1.5 inch) long, 0,17 tex (1.5 denier) Chisso ES polyethylene sheath/polypropylene core conjugate staple fibers and 5 wt% of 3,81 (1.5 inch) long, 0,2 tex (2 denier) Chisso ES-HB polyethylene sheath/polypropylene core conjugate staple fibers. The conjugate staple fibers are available from Chisso Corporation of Japan. The fiber blend was thoroughly mixed and then carded on a forming surface. Over the inner layer, 3,81cm (1.5 inch) long, 0,3 tex (3 denier) polyethylene sheath/polyester core conjugate staple fibers, which are available from BASF Corporation Fibers Division, North Carolina, were carded to form a 17g/m² (0.5 osy)outer layer. The two layered carded web was through-air bonded at about 132.2°C (270°F).

The bonded web was then placed over an assembly of six parallel vertical shims, which were 1,27 cm (0.5 inches) tall and placed 1,27cm (0.5 inches) apart, and the shim assembly was then placed over a vacuum apparatus. The vacuum apparatus was set to 0,025 bar (10 inches of water) negative pressure to pull the web into the gaps between the shims to form a pleated web. An air manifold was placed approximately 3,81 cm(1.5 inches) above the web, and heated air of about 179,4°C(355°F) was supplied at about 0,414 bar (6 psi) to thermoform the web for about two seconds and then the web was cooled. The resulting web contained 5 permanent folds and was soft and resilient.

### Example 3

An assembly of parallel vertical shims placed 6,35 mm (0.25 inches) apart was prepared. The shims were 1,27 cm (0.5 inches) tall and 0,635 mm (0.025) inches thick. A 50,9 g/m² (1.5 osy)basis weight through-air bonded bicomponent spunbond web of a 1,905 mm (0.075 inch) thickness was produced with the process described in Example 1.

Two layers of the spunbond web were cut to about 24,13 cm (9.5 inches) of length and placed over the shim assembly. The fabric was then mechanically inserted between the gaps of the shims to form a closely folded pleats. The shim assembly with the folded fabric was placed in an oven at 150°C for ten minutes to activate the adhesive component of the conjugate fiber web. The thermoformed web was then cooled and removed from the shim assembly. The resulting thermoformed web had a tightly folded structure having about 2,032 cm (0.8 inches) in height. The thermoformed web was highly resilient, and yet had a soft, cloth-like texture as well as a lofty side-wall thickness. The permanent corrugated shape of the thermoformed web exhibited excellent weight-supporting property. The respective densities of the substrate web and the thermoformed article were 0.0267 g/cm³ and 0.034 g/cm³, and there was no apparent change in the surface area. Consequently, the density-over-area ratio was about 1.27.

The thermoformed article was tested for its resiliency using an Instron tensile tester arranged for compression resiliency testing. The anvil used had a diameter of 4,93 cm (1.94 inches) and the jaw speed was 0,508 cm (0.2 inches) per minute. The thickness of the article was measured under compression and after the compression force was removed. The results are shown in Table 2, and the results demonstrate the resiliency of the present thermoformed article.

**Table 2**

| Thickness (inches) x 2,54 cm | Load (psi) x 0,069 bar | | | |
|---|---|---|---|---|
| | 0.01 | 0.1 | 0.5 | 4.0 |
| Under Load | 0.81 | 0.62 | 0.49 | 0.38 |
| Load Removed | 0.61 | 0.50 | - | - |

These examples illustrate that thermoformed articles thermoformed in accordance with the present invention from the present thermoformable web are highly resilient while providing excellent soft, cloth-like texture.

## Claims

1. A process for producing a shaped article from a lofty nonwoven crimped-fiber substrate web (62,82,90) comprising a structural fiber component and a heat-activatable adhesive component, said nonwoven web having a density below about 0.1 g/cm³, which process comprises the steps of:
a) thermobonding by heating said web to melt said adhesive component and to make said web pliable without melting said structural fiber component,
b) thermoforming by shaping said web on a mold (50,52;64,66; 84;90,94,96); and
c) cooling the shaped web to solidify the melted adhesive component and to form interfiber bonds,
**characterised in that**
for producing a resiliently compressible, cloth-like article from a substrate web having a density between about 0.01 g/cm³ to about 0.1 g/cm³, said article is thermoformed by heating said substrate web for melting said adhesive component and inserting it into an unheated mold (50,52;64,66;84;90,94,96) for shaping by lightly applying a pneumatic or mechanical conforming pressure without applying high compacting pressures and without applying substantial stretching tensions on said substrate web once said web is placed over said mold and that said thermoformed article has a density-over-area ratio between about 1 and about 1.8.

2. The process of claim 1 wherein said substrate web is first preheated for activating said adhesive component, and thereafter said preheated web is placed in said mold (50,52;64,66;84;90,94,96) and cooled.

3. The process of claim 1 wherein said substrate web is first thermobonded, the bonded web is then preheated to a temperature equal to or above the melting point of said adhesive component but below the softening point of said structural fiber component and placed over said mold.

4. A process for producing a shaped article from a lofty nonwoven crimped-fiber substrate web (62,82,90) comprising a structural fiber component and a heat-activatable adhesive component, said nonwoven web having a density below about 0.1 g/cm³, which process comprises the steps of:
a) thermobonding by heating said web to melt said adhesive component and to make said web pliable without melting said structural fiber component,
b) thermoforming by shaping said web on a mold (50,52;64,66; 84;90,94,96); and
c) cooling the shaped web to solidify the melted adhesive component and to form interfiber bonds,
**characterised in that**
for producing a resiliently compressible, cloth-like article from a substrate web having a density between about 0.01 g/cm³ to about 0.1 g/cm³, said article is thermoformed and thermobonded by inserting said substrate web into an unheated mold and thereafter heating said web in said mold to melt said adhesive component by applying heat from an external source (70,86,98) for thermobonding and thermoforming by lightly applying a pneumatic or mechanical conforming pressure without applying high compacting pressures and without applying substantial stretching tensions on said substrate web once said web is placed over said mold and that said thermoformed article has a density-over-area ratio between about 1 and about 1.8.

5. The process of claim 4, wherein said external heat is applied by a through-air, or an infrared, or a hot-oven heating process.

6. The process of claims 4 or 5, wherein a mold is used having a total void area of at least about 25%, preferably about 50%.

7. The process of any one of claims 1 to 6 wherein said mold is one or a pair of foraminous plates (64,66,84).

8. The process of any one of claims 1 to 6 wherein said mold is one or a pair of foraminous plates (92,94) having relatively vertical shims (96).

9. The process of any one of claims 1 to 8 wherein said mold (50,52) forms a gap (54) of at least about the thickness of said substrate web.

10. The process of any one of claims 1 to 9 wherein said structural fiber component is crimped staple fibers.

11. The process of any one of claims 1 to 9 wherein said structural fiber component is crimped spunbond fibers.

12. The process of any one of claims 1 to 11 wherein said adhesive component is a hot-melt adhesive.

13. The process of any one of claims 1 to 11 wherein said structural fiber component and said head-activatable adhesive component are conjugate fibers.

14. The process of any one of claims 1 to 13 wherein said thermoformed article has a density-over-area ratio between about 1.1 and about 1.5.

15. The process of any one of claims 1 to 14 wherein the ratio between the total surface area of the thermoformed article and the total affected surface area of the substrate web is about 1.11.

16. The process of any one of claims 1 to 15, comprising the steps of:
a) depositing said components for said nonwoven fiber web on a foraminous forming surface to form said nonwoven fiber substrate web, said foraminous forming surface containing three dimensional shapes,
b) heating said web for melting said adhesive component without melting said structural component, and for shaping said web, and
c) cooling the shaped web to solidify the melted adhesive component and to form interfiber bonds.

17. The process of any one of claims 1 to 16 wherein the bonded web is shaped into a cup shape.

18. The process of any one of claims 1 to 16 wherein the bonded web is shaped into an anatomically conforming shape.

19. The process of any one of claims 1 to 16 wherein the bonded web is shaped into a personal care article.

20. The process of claim 19 wherein the bonded web is shaped into a shell for a sanitary napkin.

## Patentansprüche

1. Verfahren zum Herstellen eines geformten Artikels aus einer voluminösen, nicht gewebten Kräuselfaser-Substratbahn (62, 82, 90), die eine Strukturfaserkomponente und eine wärmeaktivierbare, klebende Komponente aufweist, wobei die nicht gewebte Bahn eine Dichte unter etwa 0,1 g/cm³ aufweist, wobei der Verfahrensschritt die folgenden Verfahrensschritte aufweist:
a) Thermobinden durch Erwärmen einer Bahn, um die klebende Komponente zu schützen und die Bahn formbar zu machen, ohne daß die Strukturfaserkomponente geschmolzen wird,
b) Thermoformen der Bahn durch Gestaltgebung in einer Form (50, 52; 64, 66; 84; 90, 94, 96); und
c) Abkühlen der geformten Bahn zum Erstarren der geschmolzenen klebende Komponente und zum Ausbilden von Zwischenfaserbindungen,
**dadurch gekennzeichnet**, daß zum Herstellen eines rückfedernd komprimierbaren, stoffähnlichen Artikels aus einer Substratbahn mit einer Dichte zwischen etwa 0,01 g/cm³ bis etwa 0,1 g/cm³, der Artikel thermogeformt wird durch Erwärmen der Substratbahn zum Schmelzen der klebenden Komponente und sein Einsetzen in eine unbeheizte Form (50, 52; 64, 66; 84; 90, 94, 96) zum Formgeben durch leichtes Aufbringen eines pneumatischen oder mechanischen Anpaßdruckes ohne Aufbringen hoher Verdichtungsdrücke und ohne das Aufbringen wesentlicher Dehnspannungen auf die Substratbahn, wenn die Substratbahn bereits über der Form angeordnet ist, und daß der thermogeformte Artikel ein Dichte/Fläche-Verhältnis zwischen etwa 1 und etwa 1,8 aufweist.

2. Verfahren nach Anspruch 1, wobei die Substratbahn zunächst vorgewärmt wird, um die klebende Komponente zu aktivieren, und daß danach die vorgewärmte Bahn in die Form (50, 52; 64, 66; 84; 90, 94, 96) eingesetzt und abgekühlt wird.

3. Verfahren nach Anspruch 1, wobei die Substratbahn zunächst thermogebunden wird, die gebundene Bahn danach auf eine Temperatur vorgewärmt wird, die gleich oder oberhalb des Schmelzpunktes der klebenden Komponente jedoch unterhalb des Erweichungspunktes der Strukturfaserkomponente liegt, und über der Form angeordnet wird.

4. Verfahren zum Herstellen eines geformten Artikels aus einer voluminösen, nicht gewebten Kräuselfaser-Substratbahn (62, 82, 90), die eine Strukturfaserkomponente und eine wärmeaktivierbare klebende Komponente aufweist, wobei die nicht gewebte Bahn eine Dichte unter etwa 0,1 g/cm³ aufweist, wobei das Verfahren die folgenden Verfahrensschritte aufweist:
a) Thermobinden durch Erwärmen der Bahn zum Schmelzen der klebenden Komponente und zum Formbarmachen der Bahn, ohne daß die Strukturfaserkomponente geschmolzen wird,
b) Thermoformen durch Gestaltgeben der Bahn in einer Form (50, 52; 64, 66; 84; 90, 94, 96); und
c) Abkühlen der geformten Bahn um die geschmolzene klebende Komponente zu verfestigen und Zwischenfaserbindungen zu bilden,
**dadurch gekennzeichnet**, daß zum Herstellen eines rückfedernd komprimierbaren, stoffähnlichen Artikels aus einer Substratbahn mit einer Dichte zwischen etwa 0,01 g/cm³ bis etwa 0,1 g/cm³, der Artikel thermogeformt und thermogebunden wird, indem man die Substratbahn in eine unbeheizte Form eingibt und danach die Bahn in der Form erwärmt, um die klebende Komponente zu schmelzen, indem man Warme aus einer externen Quelle (70, 86, 98) aufbringt, für ein Thermobinden und Thermoformen durch ein leichtes Aufbringen eines pneumatischen oder mechanischen Anpaßdruckes, ohne daß hohe Verdichtungsdrücke aufgebracht werden, und ohne daß wesentliche Dehnkräfte auf die Substratbahn aufgebracht werden, nachdem die Bahn über der Form angeordnet ist, und daß der thermogeformte Artikel ein Dichte/Fläche-Verhältnis zwischen etwa 1 und etwa 1,8 aufweist.

5. Verfahren nach Anspruch 4, wobei die äußere Wärme durch ein Durchluft-, oder ein Infrarot-, oder ein Heißofen-Erwärmverfahren aufgebracht wird.

6. Verfahren nach den Ansprüchen 4 oder 5, wobei eine Form verwendet wird, die eine Gesamtleerfläche von etwa 25 %, bevorzugt etwa 50 % aufweist.

7. Verfahren nach einem der Ansprüche 1 bis 6, wobei die Form eine durchlässige Platte oder ein Paar durchlässige Platten (64, 66, 84) aufweist.

8. Verfahren nach einem der Ansprüche 1 bis 6, wobei die Form eine durchlässige Platte oder ein Paar durchlässige Platten aufweist, die annähernd vertikale Distanzhalter (96) haben.

9. Verfahren nach einem der Ansprüche 1 bis 8, wobei die Form (50, 52) einen Zwischenraum (54) von mindestens etwa der Dicke der Substratbahn bildet.

10. Verfahren nach einem der Ansprüche 1 bis 9, wobei die Strukturfaserkomponente gekräuselte Stapelfasern sind.

11. Verfahren nach einem der Ansprüche 1 bis 9, wobei die Strukturfaserkomponente gekräuselte spinngebundene Fasern sind.

12. Verfahren nach einem der Ansprüche 1 bis 11, wobei die klebende Komponente ein Heißschmelzkleber ist.

13. Verfahren nach einem der Ansprüche 1 bis 11, wobei die Strukturfaserkomponente und die wärmeaktiverbare, klebende Komponente mehrkomponente Fasern sind.

14. Verfahren nach einem der Ansprüche 1 bis 13, wobei der thermogeformte Artikel ein Dichte/Fläche-Verhältnis zwischen etwa 1,1 und etwa 1,5 aufweist.

15. Verfahren nach einem der Ansprüche 1 bis 14, wobei das Verhältnis zwischen dem Gesamtflächenbereich des thermogeformten Artikels und dem gesamten, beeinflußten Oberflächenbereich der Substratbahn bei etwa 1,11 liegt.

16. Verfahren nach einem der Ansprüche 1 bis 15, umfassend die folgenden Verfahrensschritte:
a) Ablegen der Komponenten für die nicht gewebte Faserbahn auf einer durchlässigen Formfläche, um die nicht gewebte Fasersubstratbahn zu bilden, wobei die durchlässige Formfläche dreidimensionale Formen enthält,
b) Aufheizen der Bahn zum Aufschmelzen der klebenden Komponente, ohne die Strukturkomponente zu schmelzen, und zum Gestaltgeben der Bahn, und
c) Abkühlen der geformten Bahn um die geschmolzene klebende Komponente zu verfestigen und um Zwischenfaserbindungen zu bilden.

17. Verfahren nach einem der Ansprüche 1 bis 16, wobei die gebundene Bahn zu einer Tassenform geformt wird.

18. Verfahren nach einem der Ansprüche 1 bis 16, wobei die gebundene Bahn in eine anatomisch angepaßte Gestalt geformt wird.

19. Verfahren nach einem der Ansprüche 1 bis 16, wobei die gebundene Bahn zu einem Artikel für die persönliche Hygiene geformt wird.

20. Verfahren nach Anspruch 19, wobei die gebundene Bahn zu einer Schale für eine Monatsbinde geformt wird.

## Revendications

1. Un procédé de production d'un article formé à partir d'une nappe de substrat (62, 82, 90) haute (volumineuse) et non tissée en fibres pliées comprenant un composant fibreux structurel et un composant adhésif thermo-activable, ladite nappe non tissée ayant une densité inférieure à environ 0,1 g/cm³, le procédé comprenant les étapes consistant à :
a) effectuer une liaison thermique en chauffant ladite nappe pour faire fondre ledit composant adhésif et pour rendre ladite nappe pliable, sans faire fondre ledit composant fibreux structurel,
b) thermoformer par façonnage de ladite nappe sur un moule (50, 52; 64, 66; 84; 90, 94, 96); et
c) refroidir la nappe conformée pour laisser le composant adhésif fondu se solidifier et former des liaisons interfibres,
caractérisé en ce que
pour produire un article analogue à un habillement compressible élastiquement à partir d'une nappe de substrat d'une densité comprise entre 0,01 g/cm³ à environ 0,1 g/cm³, ledit article est thermoformé par chauffage de ladite nappe de substrat pour faire fondre ledit composant adhésif et l'insérer dans un moule non chauffé (50, 52; 64, 66; 84; 90, 94, 96) pour conformer en appliquant une légère pression pneumatique ou pression de conformation mécanique sans appliquer de fortes compressions de compactage et sans appliquer de tensions d'étirement substantiel sur ladite nappe de substrat, une fois que ladite nappe est placée sur ledit moule, et en ce que ledit article thermoformé a un rapport densité/surface d'environ 1 et d'environ 1,8.

2. Le procédé selon la revendication 1, dans lequel ladite nappe de substrat est d'abord préchauffée pour activer ledit composant adhésif, puis ladite nappe préchauffée est placée dans ledit moule (50, 52; 64, 66; 84; 90, 94, 96) et refroidie.

3. Le procédé selon la revendication 1, dans lequel ladite nappe de substrat est d'abord thermoliée, la nappe liée est ensuite préchauffée à une température égale ou supérieure au point de fusion dudit composant adhésif, mais inférieure au point d'amollissement dudit composant fibre structuré et placée sur ledit moule.

4. Un procédé pour produire un article formé à partir d'une nappe de substrat (62, 82, 90) haute (volumineuse) et non tissée, en fibres pliées comprenant un composant fibreux structurel ayant un composant adhésif activable à la chaleur, ladite nappe non tissée ayant une densité inférieure environ 0,1 g/cm^{3,} ledit procédé comprenant les étapes consistant à :
a) effectuer une liaison thermique en chauffant ladite nappe pour faire fondre ledit composant adhésif et pour rendre ladite nappe pliable, sans faire fondre ledit composant fibreux structurel,
b) thermoformer par façonnage de ladite nappe sur un moule (50, 52; 64, 66; 84; 90, 94, 96); et
c) refroidir la nappe conformée pour laisser le composant adhésif fondu se solidifier et former des liaisons interfibres,
caractérisé en ce que
pour produire un article analogue à un habillement compressible élastiquement à partir d'une nappe de substrat d'une densité comprise entre 0,01 g/cm³ à environ 0,1 g/cm³, ledit article est thermoformé et thermo-lié par insertion de ladite nappe de substrat dans un moule non chauffé, puis en chauffant ladite nappe de substrat pour faire fondre ledit composant adhésif par application de chaleur issue d'une source externe (70, 86, 98) pour obtenir une thermo-liaison et un thermoformage, en appliquant une légère pression pneumatique ou pression de conformation mécanique sans appliquer de fortes compressions de compactage et sans appliquer de tensions d'étirement substantielles sur ladite nappe de substrat, une fois que ladite nappe est placée sur ledit moule, et en ce que ledit article thermoformé a un rapport densité/surface d'environ 1 et d'environ 1,8.

5. Le procédé selon la revendication 4, dans lequel ladite chaleur externe est appliquée par un passage d'air, ou une exposition à des infrarouges, ou par un processus de chauffage en four chaud.

6. Le procédé selon la revendication 4 ou 5, dans lequel un moule est utilisé d'une surface exposée au vide total d'au moins environ 25 %, de préférence d'environ 50 %.

7. Le procédé selon l'une quelconque des revendications 1 à 6, dans lequel ledit moule est un moule d'une paire de plaques foramineuses (64, 66, 84).

8. Le procédé selon l'une quelconque des revendications 1 à 6, dans lequel ledit moule est un moule d'une paire de plaques foramineuses (92, 94) ayant des rebords (96) relativement verticaux.

9. Le procédé selon l'une quelconque des revendications 1 à 8, dans lequel ledit moule (50, 52) forme un interstice (54) d'au moins environ l'épaisseur de ladite nappe de substrat.

10. Le procédé selon l'une quelconque des revendications 1 à 9, dans lequel ledit composant à fibre structurelle est constitué par des fibres discontinues pliées.

11. Le procédé selon l'une quelconque des revendications 1 à 9, dans lequel ledit composant fibreux structurel est constitué par des fibres en tissu non tissé pliées.

12. Le procédé selon l'une quelconque des revendications 1 à 11, dans lequel ledit composant adhésif est un adhésif à thermofusion.

13. Le procédé selon l'une quelconque des revendications 1 à 11, dans lequel ledit composant fibreux structurel et ledit composant adhésif activable par la chaleur sont des fibres conjuguées.

14. Le procédé selon l'une quelconque des revendications 1 à 13, dans lequel ledit article thermoformé a un rapport densité/surface entre environ 1,1 et 1, 5.

15. Le procédé selon l'une quelconque des revendications 1 à 14, dans lequel le rapport entre l'aire de la surface totale de l'article thermoformé et l'aire de la surface totale affectée de la nappe de substrat est d'environ 1,11.

16. Le procédé selon l'une quelconque des revendications 1 à 15, comprenant les étapes consistant à :
a) déposer lesdits composants pour ladite nappe fibreuse non tissée sur une surface de formage foramineuse pour former ladite nappe de substrat fibreuse non tissée, ladite surface de formage foramineuse comprenant trois formes dimensionnelles,
b) chauffer ladite nappe pour faire fondre ledit composant adhésif sans faire fondre ledit composant structurel et pour former ladite nappe, et
c) refroidir la nappe solidifiée pour solidifier le composant adhésif fondu et pour former des liaisons interfibres.

17. Le procédé selon l'une quelconque des revendications 1 à 16, dans lequel la nappe liée est conformée en une forme en coupelle.

18. Le procédé selon l'une quelconque des revendications 1 à 16, dans lequel la nappe liée est conformée en une forme de conformation anatomique.

19. Le procédé selon l'une quelconque des revendications 1 à 16, dans lequel la nappe liée est façonnée en un article de soin personnel.

20. Le procédé selon la revendication 19, dans lequel la nappe liée est conformée en une coquille pour une serviette sanitaire.
